(19) Europäisches Patentamt
European Patent Office
Office européen des brevets

(11) Publication number: **0 505 986 A2**

# (12) EUROPEAN PATENT APPLICATION

(21) Application number: **92105059.7**

(22) Date of filing: **24.03.92**

(51) Int. Cl.[5]: **C08G 18/08**, C08G 18/34, C09J 175/06

(30) Priority: **25.03.91 JP 86055/91**

(43) Date of publication of application: **30.09.92 Bulletin 92/40**

(84) Designated Contracting States: **DE FR GB**

(71) Applicant: **Sunstar Engineering Inc.**
**7-1, Aketacho**
**Takatsuki-shi Osaka-fu(JP)**

(72) Inventor: **Torii, Kousuke**
**1-2-7-205, himuro-cho**
**Takatsuki-shi, Osaka(JP)**
Inventor: **Mori, Masahito**
**17-1-201, Nyoze-cho**
**Takatsuki-shi, Osaka(JP)**
Inventor: **Okamoto, Hirokazu**
**12-8, kitade-cho**
**Sijyonawate-shi, Osaka(JP)**

(74) Representative: **Vossius & Partner**
**Siebertstrasse 4 P.O. Box 86 07 67**
**W-8000 München 86(DE)**

## (54) Solvent-type 2-part adhesive and its main composition.

(57) A solvent-type 2-part adhesive comprising:
a main composition comprising (A) a polyurethane component having a hydroxyl group at each of the terminuses thereof and obtained by reacting a polyol and a polyurethane-based reaction product having at each of the terminuses thereof an active isocyanate group, said polyurethane-based reaction product being obtained by reacting a polyisocyanate compound, a saturated polyester polyol and a hydrophilic component having a hydrophilic group and at least 2 functional groups reactable with isocyanate group, and (B) a polyisocyanate compound as a curing agent.

The adhesive can adhere with high strength composite materials such as shaped wood fiber impregnated with polyolefin resin that are difficult to adhere firmly with conventional solvent-type adhesives.

EP 0 505 986 A2

The present invention relates to a solvent-type 2-part adhesive, which comprises two components, i.e. a main composition and a curing agent, to be mixed before use and, more specifically, to a polyurethane-based solvent-type 2-part adhesive which exhibits, when used for the adhesion of flexible polyvinyl chloride resin to substrates having a surface layer formed by compositing a wood fiber such as jute pulp and a polyolefin resin such as polypropylene (PP) or Polyethylene (PE), high adhesion strength both just after adhesion and during the ordinary state.

Solvent-type polyesterpolyurethane rubbers have been used for adhering, for example, a cover material of flexible polyvinyl chloride resin to a substrate comprising a wood fiber impregnated with a polyolefin resin. These rubbers however have not been able to give sufficient adhesion strength.

It is the object of the present invention to provide a solvent-type 2-part adhesive that exhibits excellent adhesiveness when used for the adhesion of composite materials which have been difficult to adhere with conventional solvent-type adhesives, such as wood fibers impregnated with a polyolefin resin.

The above object has been achieved on the basis of the finding that improved adhesion is obtained by improving the compatibility with the wood pulp having a large amount of hydrophilic groups.

Thus, the subject matter of the present invention is a solvent-type 2-part adhesive comprising:
a main composition comprising (A) a polyurethane component having a hydroxyl group at each of the terminuses thereof and obtained by reacting a polyol and a polyurethane-based reaction product having at each of the terminuses thereof an active isocyanate group, said polyurethane-based reaction product being obtained by reacting a polyisocyanate compound, a saturated polyester polyol and a hydrophilic component having a hydrophilic group and at least 2 functional groups reactable with isocyanate group, and (B) a polyisocyanate compound as a curing agent.

Any saturated polyester polyol can be used in the present invention without specific limitation, and its examples are aromatic polyesters, e.g. terephthalic acid-based polyesters such as polyethylene terephthalate and polytetramethylene terephthalate and isophthalic acid-based polyesters such as polyethylene isophthalate and polytetramethylene isophthalate; and linear aliphatic acid-based polyesters such as polyethylene oxalate, polytrimethylene oxalate, polytetramethylene oxalate, polyhexamethylene oxalate, polyoctamethylene oxalate, polydecamethylene oxalate, polyicosamethylene oxalate, polyicosamethylene malonate, polyethylene succinate, polytetramethylene succinate, polyhexamethylene succinate, polydecamethylene succinate, polyicosamethylene succinate, polydecamethylene glutarate, polyicosamethylene glutarate, polytetramethylene adipate, polyhexamethylene adipate, polydecamethylene adipate, polyicosamethylene adipate, polyhexammethylene pimelate, polydecamethylene pimelate, polyicosamethylene pimelate, polyethylene suberate, polyhexamethylene suberate, polydecamethylene suberate, polyicosamethylene suberate, polyhexamethylene azelate, polydecamethylene azelate, polyethylene sebacate, polytetramethylene sebacate, polypentamethylene sebacate, polyhexamethylene sebacate, polydecamethylene sebacate and polyicosamethylene sabacate. These polyester polyols preferably have a molecular weight of 1,000 to 5,000.

The hydrophilic component in the present invention has at its terminuses or side chains at least 2 functional groups reactable with isocyanate group and, for the purpose of providing the resulting polyurethane component with hydrophilicity, at least one hydrophilic group such as -COOH, -COONa, $-COONH_4$, $-SO_3H$, $-SO_3Na$ or $-SO_3NH_4$, in the molecule thereof. Examples of the hydrophilic component are 2,2-dimethylolpropionic acid (DMPA), anionic hydrophilicity-donating substances such as sulfonic acid-based ones as shown by the following formulas (1) and (2),

$H_2N\text{-}CH_2\text{-}CH_2\text{-}NH\text{-}(\text{-}CH_2\text{-})_x\text{-}SO_3Na$ (1)

wherein X represents an integer of 2 or 3,

$$HO\text{-}CH_2\text{-}CH_2\text{-}\underset{\displaystyle SO_3Na}{\underset{|}{CH}}\text{-}CH_2\text{-}OH \qquad (2)$$

carboxylic acid-based ones as shown by the following formulas (3), (4) and (5)

$$H_2N-(-CH_2-)_4-\underset{\displaystyle COOH}{\underset{|}{CH}}-NH_2 \qquad (3)$$

$$H_2N-CH_2-CH_2-\underset{\displaystyle CH_2-CH_2-COONa}{\underset{|}{NH}} \qquad (4)$$

$$H_2N-CH_2-CH_2-\underset{\displaystyle CH_2-CH_2-COOH}{\underset{|}{NH}} \qquad (5)$$

and cationic hydrophilicity-donating substances as shown by the following formulas (6) and (7)

$$HO-CH_2-CH_2-\underset{\displaystyle R}{\underset{|}{N}}-CH_2-CH_2-OH \qquad (6)$$

wherein R represents an alkyl group

$$HO-CH_2-\overset{\displaystyle C_2H_5}{\overset{|}{\underset{\displaystyle CH_2-N(-CH_3)_2}{\underset{|}{\overset{\oplus}{N}}}}}-CH_2-OH \qquad (7)$$

The polyisocyanate compound used in the present invention reacts with the above 2 components, i.e. the saturated polyester polyol and the hydrophilic component, thereby obtaining a polyurethane-based reaction product having an isocyanate group at each of the terminuses thereof. Examples of the polyisocyanate compound are aliphatic or aromatic diisocyanates, such as hexamethylene diisocyante (HDI), diphenylmethane-4,4'-diisocyanate (MDI), tolylene diisocyanate (TDI), isophorone diisocyanate (IPDI) and m-xylylene diisocyanate (XDI) and hydrates of the foregoing.

The polyol in the present invention is used for the purpose of converting the isocyanate group present at each of the terminuses of the above polyurethane-based reaction product into hydroxyl group, which can then be, by a curing agent (polyisocyanate compound), crosslinked and cured via urethane bond. Preferred examples of the polyol are low-molecular-weight compounds such as ethylene glycol, propylene glycol, hexane diol, ethanolamine and butanediol.

In the reactions for obtaining the polyurethane component having terminal hydroxyl groups used in the present invention, preferred amounts of the reactants are, based on n moles of the polyester polyol used , (n ± 1) moles for the hydrophilic component, (2n + 2) moles for the polyisocyanate compound and 2 moles for the polyol. The amounts may vary with the above as the central figures. The polyurethane component preferably has a molecular weight of 5,000 to 100,000, more preferably 10,000 to 50,000. Examples of the polyisocyanate compound as the solvent-based curing agent used in the present invention are those mentioned for the above polyisocyanate compound and their derivatives and HDI derivatives such as trimethylolpropane (TMP) aduct trimer and isocyanurate trimer of HDI, MDI derivatives such as crude MDI, TDI derivatives such as TNP aduct trimer and isocyanurate trimer of TDI, IPDI derivatives such as TMP aduct trimer and isocyanurate trimer of IPDI, XDI derivatives such as TMP aduct trimer and isocyanurate trimer of XDI, tris(p-isocyanatephenyl) thiophosphate and trisphenylmethane triisocyante (trade name: "DESMODUR R" made by Bayer).

The main composition comprising the polyurethane component and the curing agent are used in the present invention preferably in a ratio, NCO/OH, of 1 to 10.

As described heretofore, the main composition of the solvent-type 2-part adhesive of the present invention is formed by reacting a polyester polyol component having a large cohesive strength and a

hydrophilic component having a large compatibility with substrates containing hydrophilic component. The adhesive with this main composition of the present invention is particularly suitable for adhering substrates comprising materials containing hydrophilic component, such as wood fibers impregnated with polyolefin resin. The adhesive may incorporate, for increasing its initial cohesive strength, a polyesterpolyurethane rubber which has been widely used for solvent-type adhesives, generally in an amount of not more than 500 parts by weight based on 100 parts by weight of the polyurethane component.

The main composition of the solvent-type 2-part adhesive is produced by, for example, the following steps ① through ④.

Step ①

A saturated polyester polyol is dissolved in an organic solvent such as acetone, methyl ethyl ketone, xylene or toluene, in a reaction vessel equipped with a heating means and a reflux condenser.

Step ②

A hydrophilic component is added to the solution obtained in Step ① and the mixture is heated to a temperature of 40 to 100° C and kept at that temperature.

Step ③

A polyisocyanate compound is added to the liquid obtained in Step ②, and the resulting mixture is stirred for 2 to 12 hours, to effect bonding reaction, whereby a polyurethane-based reaction product having an active isocyanate groups at each of the terminuses thereof forms. At this time a catalyst such as an amine or organic tin compound may, as occasions demand, be added.

Step ④

A polyol is added to the solution of the polyurethane-based reaction product obtained in Step ③, and reaction is effected to convert the terminal isocyanate groups of the latter into hydroxyl groups, to obtain the polyurethane component.

The above process for producing the main composition comprising polyurethane component and used in the present invention is a mere example, and the present invention does not exclude, naturally, those produced by other processes.

The main composition as obtained above is before use mixed with a curing agent and the resulting adhesive is applied on a substrate and cured at a room temperature or by heating to develop strong adhesion.

Other features of the invention will become apparent in the course of the following descriptions of exemplary embodiments which are given for illustration of the invention and are not intended to be limiting thereof.

EXAMPLES

(1) Preparation of polyurethane component

① Preparation of polyurethane component-A

In a reaction vessel equipped with a heating means and a reflux condenser polyhexamethylene adipate polyol (average molecular weight, Mw: about 2,000) was dissolved in toluene. To the solution 2,2-dimethylolpropionic acid was added and the mixture was heated to a temperature of 80°C and maintained at the temperature.

HDI was added to the mixture and reaction was effected for 10 hours. Ethylene glycol was added to the reaction mixture and reaction was further effected for 10 hours, to obtain a polyurethane having a hydroxyl group at each of the terminuses thereof, which was named polyurethane component-A.

② Preparation of polyurethane component-B

The above procedure (1)-① was repeated except that 2,2-dimethylolpropionic acid was not added, to

obtain polyurethane component-B.

Table 1 shows the amount (g) of each of the starting materials used in the above (1)-① and -② .

Table 1

| | Polyurethane component-A | Polyurethane component-B |
|---|---|---|
| Polyester | 100 | 100 |
| Toluene | 100 | 100 |
| DMPA | 4.5 | - |
| HDI | 20 | 11 |
| Ethylene glycol | 2 | 2 |
| Note Unit: grams | | |

(2)

Examples 1 through 4 and Comparative Examples 1 through 3

Example 1

A main composition agent was prepared by dissolving with stirring 100 g of a polyesterpolyurethane rubber (DESMOCOLL 500 made by Bayer) and 50 g of polyurethane component-A in 850 g of acetone. To 1,000 g of the main composition thus obtained 50 g of DESMODUR R (trisphenylmethane triisocyanate) as the curing agent was added and the mixture was stirred.

Example 2

Example 1 was repeated except for using the same amount of another polyesterpolyurethane rubber (DESMOCOLL 530 made by Bayer) instead of DESMOCOLL 500.

Example 3

Example 1 was repeated except for using the same amount of another polyesterpolyurethane rubber (DESMOCOLL 540 made by Bayer) instead of DESMOCOLL 500.

Example 4

A main composition was prepared by dissolving 50 g of polyurethane component-A in 150 g of acetone. To 200 g of the obtained main composition 10 g of DESMODUR R as the curing agent was added and the mixture was stirred.

Comparative Example 1

Example 1 was repeated except for using, instead of polyurethane component-A, the same amount of polyurethane component-B.

Comparative Example 2

Example 2 was repeated except for using, instead of polyurethane component-A, the same amount of polyurethane component-B.

Comparative Example 3

Example 3 was repeated except for using, instead of polyurethane component-A, the same amount of polyurethane component-B.

Table 2 shows the amount (g) of each of the starting materials used in the above Examples 1 through 4 and Comparative Examples 1 through 3.

Table 2

| | Example | | | | Comparative Example | | |
|---|---|---|---|---|---|---|---|
| | 1 | 2 | 3 | 4 | 1 | 2 | 3 |
| Urethane rubber A | 100 | - | - | - | 100 | - | - |
| Urethane rubber B | - | 100 | - | - | - | 100 | - |
| Urethane rubber C | - | - | 100 | - | - | - | 100 |
| Polyurethane component-A | 50 | 50 | 50 | 50 | - | - | - |
| Polyurethane component-B | - | - | - | - | 50 | 50 | 50 |
| Acetone | 850 | 850 | 850 | 150 | 850 | 850 | 850 |
| DESMODUR R | 50 | 50 | 50 | 10 | 50 | 50 | 50 |

Note Urethane rubber A: DESMOCOLL 500
Urethane rubber B: DESMOCOLL 530
Urethane rubber C: DESMOCOLL 540
Unit: grams

(3) Evaluation of adhesion strength

The initial adhesion strength and the adhesion strength in the ordinary state of each of the adhesives prepared above were tested as follows.

The adhesive was applied by spraying to a substrate (wood fiber impregnated with PP resin, size: 100 x 100 mm) in an amount of 150 g/$m^2$ and dried at 80°C for 2 minutes. A covering material of a flexible polyvinyl chloride resin sheet (OLSIA MP 677, made by Sunstar Engineering Inc.; size: 100 x 100 mm) was laminated on the sprayed side of the substrate and a pressure of 0.5 kg/$cm^2$ was applied thereon for 10 seconds, to obtain test pieces 1 through 4 and comparative test pieces 1 through 3, for evaluation of adhesive strength, corresponding to Examples 1 through 4 and Comparative Examples 1 through 3, respectively.

Each of the test pieces was cut to a width of 25 mm to give 4 specimens. The specimens were each peeled by 10 mm at the longitudinal end, mounted on a tensile tester and tested for 180°-peeling strength (kg/25 mm) at an extension rate of 200 mm/min. An average of tests on 4 specimens was calculated to give the adhesion strength of each of the test pieces. The results are shown in Table 3.

In Table 3, "Initial adhesion strength" shows the result obtained when test was made after the sample had been allowed to stand at a room temperature for 10 minutes after the pressing, and "Ordinary-state adhesion strength" shows that after the test piece had been kept at a room temperature for 1 day.

In the table, "MB" means that the covering material broke (Material break) in the test, "CF" (Cohesive failure) the breakage of the adhesive layer and "AF" (Adhesive failure) the breakage at the interface between the covering material and the adhesive layer.

Table 3

| | Test piece | | | | Comparative test piece | | |
|---|---|---|---|---|---|---|---|
| | 1 | 2 | 3 | 4 | 1 | 2 | 3 |
| Initial adhesion strength | 2.2 CF | 2.3 CF | 2.4 CF | 1.5 CF | 0.9 AF | 0.5 AF | 0.3 AF |
| Ordinary-state adhesion strength | 3.0 MB | 3.0 MB | 3.0 MB | 3.1 MB | 1.5 AF | 1.5 AF | 1.6 AF |

Note Unit: kg/25 mm

As is seen from Table 3, when the test pieces with the adhesives (samples 1 through 4) of the present invention comprising polyurethane component-A containing hydrophilic groups are peeled, although cohesive failure occurred at intial adhesion strength measurement, the test pieces all showed material breakage

in the ordinary state, thus proving the excellent adhesiveness of the adhesives.

On the other hand, with adhesives (comparative adhesives 1 through 3) incorporating polyurethane-B containing no hydrophilic component, there occurred all interfacial delamination by a light load, both initially and in the ordinary state, proving their small adhesiveness.

Obviously, numerous modifications and variations of the present invention are possible in light of the above teachings. It is therefore to be understood that within the scope of the appended claims, the invention may be practiced otherwise than as specifically described herein.

## Claims

**1.** A solvent-type 2-part adhesive comprising:
a main composition comprising (A) a polyurethane component having a hydroxyl group at each of the terminuses thereof and obtained by reacting a polyol and a polyurethane-based reaction product having at each of the terminuses thereof an active isocyanate group, said polyurethane-based reaction product being obtained by reacting a polyisocyanate compound, a saturated polyester polyol and a hydrophilic component having a hydrophilic group and at least 2 functional groups reactable with isocyanate group, and (B) a polyisocyante compound as a curing agent.

**2.** A solvent-type 2-part adhesive according to Claim 1, wherein said main composition further comprises an urethane rubber.

**3.** A solvent-type 2-part adhesive according to Claim 1, wherein at least one of substrates to be adhered is a material containing a hydrophilic component.

**4.** A main composition for solvent-type 2-part adhesives, comprising (A) a polyurethane component having a hydroxyl group at each of the terminuses thereof and obtained by reacting a polyol and a polyurethane-based reaction product having at each of the terminuses thereof an active isocyanate group, said polyurethane-based reaction product being obtained by reacting a polyisocyanate compound, a saturated polyester polyol and a hydrophilic component having a hydrophilic group and at least 2 functional groups reactable with isocyanate group.